(19) Europäisches Patentamt / European Patent Office / Office européen des brevets

(11) **EP 3 514 087 A1**

(12) **EUROPÄISCHE PATENTANMELDUNG**

(43) Veröffentlichungstag:
**24.07.2019 Patentblatt 2019/30**

(51) Int Cl.:
**B65G 47/53** *(2006.01)*      **B65G 47/57** *(2006.01)*

(21) Anmeldenummer: **18152556.9**

(22) Anmeldetag: **19.01.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder: **ASCHPURWIS, Carsten**
**78464 Konstanz (DE)**

(74) Vertreter: **Maier, Daniel Oliver**
**Siemens AG**
**Postfach 22 16 34**
**80506 München (DE)**

(54) **ÜBERGABE VON STÜCKGÜTERN**

(57)   1. Förderstreckenanordnung (10) zum Übergeben eines Stückguts (5) von einer ersten Förderstrecke (1) auf eine zweite Förderstrecke (2), die Förderstreckenanordnung (10) umfassend die erste Förderstrecke (1) und die zweite Förderstrecke (2), wobei:
- die erste Förderstrecke (1) einen Übergabebereich (11) mit einer ersten Förderrichtung (r1) umfasst;
- die zweite Förderstrecke (2) einen Übernahmebereich (21) mit einer zweiten Förderrichtung (r2) umfasst;
- die erste Förderrichtung (r1) sich von der zweiten Förderrichtung (r2) unterscheidet;
- der Übergabebereich (11) in den Übernahmebereich (21) mündet;
- der Übergabebereich (11) eine erste imaginäre unbegrenzte Ebene (E1) aufspannt, die sich nicht mit dem Übernahmebereich (21) schneidet;
- der Übernahmebereich (21) eine zweite imaginäre unbegrenzte Ebene (E2) aufspannt, die sich nicht mit dem Übergabebereich (11) schneidet.

FIG 3

**Beschreibung**

Die Erfindung bezieht sich auf das technische Gebiet der Übergabe von Stückgütern von einer ersten Förderstrecke auf eine zweite Förderstrecke, die eine andere Förderrichtung hat als die erste Förderstrecke, insbesondere die Übergabe von Stückgütern unterschiedlicher Größe, unterschiedlichem Gewicht und gegebenenfalls inhomogener Gewichtsverteilung. Als Förderstrecken werden oft Förderbänder verwendet, auch einfach Band genannt. Andere Förderstrecken wie Rollenbahnen oder Kombinationen von unterschiedlichen Förderstrecken, beispielsweise Kombinationen Förderbändern mit Rollenbahnen sind ebenfalls möglich.

Im Folgenden wird die Fragestellung der Anschaulichkeit halber am Beispiel von als (Förder-)Bänder ausgestalteten Förderstrecken beschrieben. Bei der Übergabe soll vermieden werden, dass sich die Güter beim Übergang vom ersten Band auf das zweite Band verdrehen. Eine solche Verdrehung kann zum Beispiel durch inhomogenes Gleiten des Gutes auf dem zweiten Band [A], einseitiges erstes Auftreffen des Gutes und anschließendes undefiniertes Springen des Gutes [B] beziehungsweise einfaches Verziehen des Gutes durch unterschiedliche Geschwindigkeits-Vektoren im vorderen und hinteren Bereich des Gutes [C] passieren. Zumeist basiert die Verdrehung auf einer Überlagerung aller dieser Effekte.

Es gibt verschiedene Methoden der Übergabe. Diese wird in der Regel auf einer Ebene vorgenommen. Mit andern Worten, das erste Band und das zweite Band sind in derselben Ebene angeordnet. Der ebenen-gleiche Übergang fördert das Gut vom ersten Band mit einer ausreichenden Geschwindigkeit über die Stoßstelle auf das zweite Band, auf dem das Gut bis auf den dortigen Fördervektor abgebremst bzw beschleunigt wird. Diese Lösung erzeugt Verdrehungen gemäss oben beschriebenen Vorgängen [A] und [C]. Eine Alternative dazu ist eine vertikale Stufe. Dabei liegt das zweite Band tiefer als erste Band und die Güter fallen auf das zweite Band. Dabei bestimmt die Geschwindigkeit des ersten Bandes und die Stufenhöhe die Wurf-Parabel und die dazu zählende beschleunigte Abkipp-Bewegung (Drall gemäß Satz von Steiner). Eine Variante davon ist, das erste Band mit einer Steigung zu versehen. Diese Lösungen erzeugen Verdrehungen gemäss oben beschriebenen Vorgängen [B], [A] und - wenn die Stufe bzw Fördergeschwindigkeit des ersten Bandes nicht angepasst ist - [C]. Erschwerend scheint die üblicherweise inhomogene Gewichtsverteilung in den Gütern zu sein, die die Abkippbewegung und damit den Auftreff-Winkel und -Punkt signifikant beeinflussen.

Der vorliegenden Erfindung liegt daher die Aufgabe zugrunde, bei der Übergabe eines Stückguts von einer ersten Förderstrecke auf eine zweite Förderstrecke Verdrehungen des Stückgutes zu verhindern oder zu reduzieren.

Diese Aufgabe wird durch die in den unabhängigen Ansprüchen vorgeschlagenen Verfahren und Vorrichtungen gelöst.

Vorteilhafte Ausgestaltungen der Erfindung sind in weiteren Ansprüchen angegeben.

Gemäss einem Aspekt betrifft die Erfindung eine Förderstreckenanordnung zum Übergeben eines Stückguts von einer ersten Förderstrecke auf eine zweite Förderstrecke. Die Förderstreckenanordnung umfasst die erste Förderstrecke und die zweite Förderstrecke. Die erste Förderstrecke umfasst einen Übergabebereich mit einer ersten Förderrichtung. Die zweite Förderstrecke umfasst einen Übernahmebereich mit einer zweiten Förderrichtung. Die erste Förderrichtung unterscheidet sich von der zweiten Förderrichtung. Der Übergabebereich mündet in den Übernahmebereich. Der Übergabebereich spannt eine erste imaginäre unbegrenzte Ebene auf, die sich nicht mit dem Übernahmebereich schneidet. Der Übernahmebereich spannt eine zweite imaginäre unbegrenzte Ebene auf, die sich nicht mit dem Übergabebereich schneidet.

Gemäss einem weiteren Aspekt betrifft die Erfindung eine Förderstreckenanordnung zum Übergeben eines Stückguts von einer ersten Förderstrecke auf eine zweite Förderstrecke. Die Förderstreckenanordnung umfasst die erste Förderstrecke und die zweite Förderstrecke. Die erste Förderstrecke umfasst einen Übergabebereich mit einer ersten Förderrichtung. Die zweite Förderstrecke umfasst einen Übernahmebereich mit einer zweiten Förderrichtung. Die erste Förderrichtung unterscheidet sich von der zweiten Förderrichtung. Der Übergabebereich mündet in den Übernahmebereich. Die erste Förderstrecke und die zweite Förderstrecke sind so angeordnet und angesteuert, dass zu einem Zeitpunkt zu welchem das Stückgut die zweite Förderstrecke erstmalig berührt ein Schwerpunkt des Stückguts über der zweiten Förderstrecke liegt.

Gemäss einem weiteren Aspekt betrifft die Erfindung ein Verfahren zum Übergeben eines Stückguts von einer ersten Förderstrecke auf eine zweite Förderstrecke. Die erste Förderstrecke umfasst einen Übergabebereich mit einer ersten Förderrichtung. Die zweite Förderstrecke umfasst einen Übernahmebereich mit einer zweiten Förderrichtung. Die erste Förderrichtung unterscheidet sich von der zweiten Förderrichtung. Der Übergabebereich mündet in den Übernahmebereich. Die erste Förderstrecke und die zweite Förderstrecke sind so angeordnet und angesteuert, dass zu einem Zeitpunkt zu welchem das Stückgut die zweite Förderstrecke erstmalig berührt ein Schwerpunkt des Stückguts über der zweiten Förderstrecke liegt.

Gemäss einer Ausführungsform berührt das Stückgut zu dem Zeitpunkt zu welchem das Stückgut die zweite Förderstrecke erstmalig berührt die erste Förderstrecke nicht mehr flächig. Vorzugsweise berührt das Stückgut zu diesem Zeitpunkt die erste Förderstrecke nur noch kantig, oder gar nicht mehr. Auf diese Weise kann verhindert werden, dass das Stückgut in seinem vorderen Bereich durch die zweite Förderstrecke in eine andere Richtung gefördert wird als im hinteren Bereich durch die erste Förderstrecke, wodurch sich ein Verdrehen verhindern oder zumindest reduzieren lässt.

Gemäss einer Ausführungsform ist der Übergabebereich in der ersten Förderrichtung ansteigend ausgestaltet, vorzugsweise mit einer Steigung von weniger als 10°, vorzugsweise mit einer Steigung zwischen 1° und 4°, vorzugsweise mit einer Steigung von 2.5°. Steigungen von über 10° sind zwar auch möglich, aber dann ist mit starken Abkippeffekten zu rechnen.

Gemäss einer Ausführungsform sind die erste Ebene und die zweite Ebene nicht parallel zueinander.

Gemäss einer Ausführungsform ist der Übernahmebereich höher als der Übergabebereich angeordnet. Der Übernahmebereich ist vorzugsweise zwischen 2 mm und 5 mm höher als der Übergabebereich angeordnet, vorzugsweise etwa 5 mm höher als der Übergabebereich angeordnet.

Gemäss einer Ausführungsform umfasst die Förderstreckenanordnung ein Antriebssystem welches ausgestaltet ist, die erste Förderstrecke mit einer Fördergeschwindigkeit zu betreiben, welche sicherstellt, dass zu einem Zeitpunkt zu welchem das Stückgut die zweite Förderstrecke erstmalig berührt ein Schwerpunkt des Stückguts über der zweiten Förderstrecke liegt. Vorzugsweise berührt das Stückgut zu diesem Zeitpunkt die erste Förderstrecke nicht mehr flächig, sondern beispielsweise kantig oder gar nicht.

Gemäss einer Ausführungsform wird die Förderstreckenanordnung für eine High Speed Induction angewendet. Dabei ist zumindest die erste Förderstrecke Teil der High Speed Induction.

Gemäss einer Ausführungsform umfasst die Förderstreckenanordnung ein Steuerungssystem. Das Steuerungssystem ist ausgestaltet, zumindest eine Eigenschaft des Stückgutes zu Ermitteln und/oder zu Empfangen, und eine Fördergeschwindigkeit der ersten Förderstrecke und/oder der zweiten Förderstrecke an die zumindest eine Eigenschaft anzupassen.

Eine solche Eigenschaft ist gemäss einer Ausführungsform eine Grösse des Stückgutes. Für kleine Stückgüter könnte die erste Förderstrecke beispielsweise mit einer höheren Geschwindigkeit betrieben werden, damit dies Stückgüter auch sicher eine Lücke zwischen der ersten und der zweiten Förderstrecke überwinden können, indem sie geworfen werden, also nicht permanent mit zumindest einer der ersten oder der zweiten Förderstrecke in Kontakt sind. Grosse Pakete können an einer Frontkante der ersten Förderstrecke eine Kippbewegung ausführen. Ebenso kann die die zweite Förderstrecke zum Übernehmen eines Stückguts angehalten, oder langsamer betrieben werden, falls die Grösse des Stückguts einen Schwellwert überschreitet.

Gemäss weiteren Ausführungsformen wird das Verfahren mittels einer der Förderstreckenanordnungen gemäss einem Ausführungsbeispiel durchgeführt.

Gemäss einem weiteren Aspekt betrifft die Erfindung ein System umfassend Mittel zur Durchführung eines der Verfahren gemäss einem Aspekt oder einem der Ausführungsbeispiele der Erfindung.

Die Erfindung wird nachfolgend anhand der Figuren beispielsweise näher erläutert. Dabei zeigen:

Figur 1a eine schematische Seitenansicht einer Förderstreckenanordnung gemäss einer Ausführungsform der Erfindung;

Figur 1b eine Draufsicht auf eine Variante der Ausführungsform von Figur 1a;

Figur 1c eine Draufsicht auf einer weiteren Variante der Ausführungsform von Figur 1a;

Figur 2 ein vergrösserter Ausschnitt von Figur 1a zur deutlicheren Sichtbarmachung des Weite und der Höhendifferenzen;

Figur 3 eine zum besseren Verständnis der Erfindung noch stärker schematisiert Seitenansicht der in Figur 1 dargestellten Förderstreckenanordnung;

Figuren 4-8 die in Figur 3 gezeigte Förderstreckenanordnung zu verschieden Zeitpunkten einer Übergabe eines Stückguts;

Figuren 9-12 zeigen mathematisch berechnete Bewegungsprofile von jeweils unterschiedlich ausgestalteten paketförmigen Stückgütern, wobei das übergebende erste Band das Stückgut aus einer höher gelegenen Position übergibt, als es vom empfangenden zweiten Band übernommen wird;

Figuren 13-16 zeigen mathematisch berechnete Bewegungsprofile von jeweils unterschiedlich ausgestalteten paketförmigen Stückgütern, wobei das übergebende erste Band das Stückgut aus einer tiefer gelegenen Position übergibt, als es vom empfangenden zweiten Band übernommen wird;

Figuren 17-20 beschreiben weitere Ausführungsbeispiele, welche Intralox® Gliedbänder verwenden.

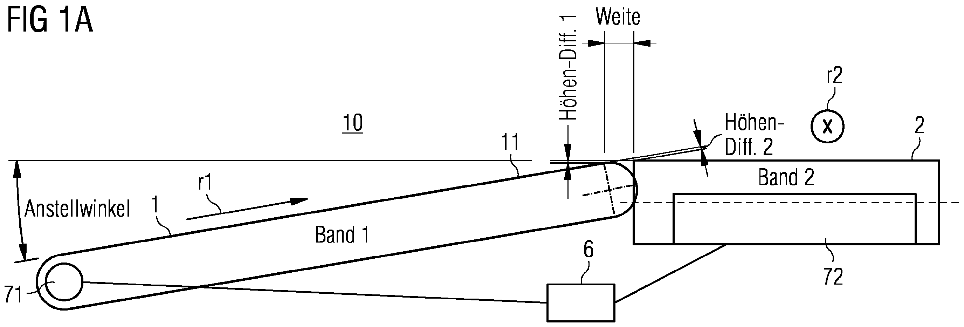

Figur 1a zeigt eine schematische Seitenansicht einer Förderstreckenanordnung 10 gemäss einer Ausführungsform der Erfindung.

Die Förderstreckenanordnung 10 umfasst eine erste Förderstrecke 1, eine zweite Förderstrecke 2, ein Steuerungssystem 6, sowie Antriebssysteme 71, 72 für die beiden Förderstrecken 1, 2. Die Förderstrecken 1, 2 sind so angeordnet und ausgestaltet, dass sie geeignet sind ein Stückgut 5 von der ersten Förderstrecke 1 auf die zweite Förderstrecke 2 zu übergeben.

Die Förderstrecken 1, 2 sind als Förderbänder ausgestaltet, zumindest die erste Förderstrecke 1 ist Teil einer High Speed Induction (HSI).

Die erste Förderstrecke 1 umfasst einen Übergabebereich 11 mit einer ersten Förderrichtung r1. Die zweite Förderstrecke 2 umfasst einen Übernahmebereich 21 mit einer zweiten Förderrichtung r2. Die erste Förderrichtung r1 unterscheidet sich von der zweiten Förderrichtung r2, und der Übergabebereich 11 mündet seitlich in den Übernahmebereich 21. Der Übergabebereich 11 spannt eine erste imaginär unbegrenzte Ebene E1 auf, die sich nicht mit dem räumlich begrenzten Übernahmebereich 21, der ja Teil der zweiten Förderstrecke 2 ist, schneidet. Der Übernahmebereich 21 wiederum spannt eine zweite imaginär unbegrenzte Ebene E2 auf, die sich nicht mit dem Übergabebereich 11 schneidet, der ja Teil der ersten Förderstrecke 1 ist.

Der Übergabebereich 11 und der Übernahmebereich sind in diesem Ausführungsbeispiel räumlich begrenzte Flächen, welche die jeweiligen Ebenen E1 und E2 aufspannen. Der Übergabebereich 11 ist in der ersten Förderrichtung r1 ansteigend ausgestaltet, vorzugsweise mit einer Steigung von weniger als 10°, vorzugsweise mit einer Steigung zwischen 1° und 4°, vorzugsweise mit einer Steigung von 2.5°. Der Übernahmebereich 21 ist horizontal angeordnet.

Die erste Ebene E1 und die zweite Ebene E2 sind nicht parallel zueinander, mit andern Worten, der Übernahmebereich 21 und der Übergabebereich 11 sind nicht parallel zueinander angeordnet.

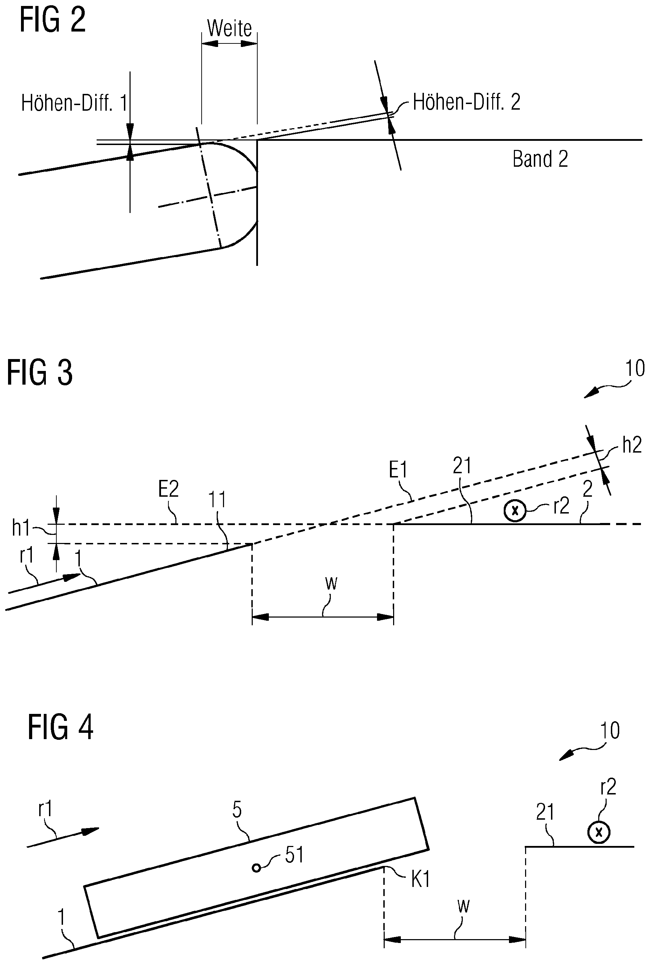

Der Übernahmebereich ist höher als der Übergabebereich angeordnet, was mit Verweis auf Figur 3 durch den Höhenunterschied h1 besonders deutlich dargestellt ist. Der Höhenunterschied h1 beträgt vorzugsweise zwischen 2 mm und 5 mm, vorzugsweise etwa 5 mm.

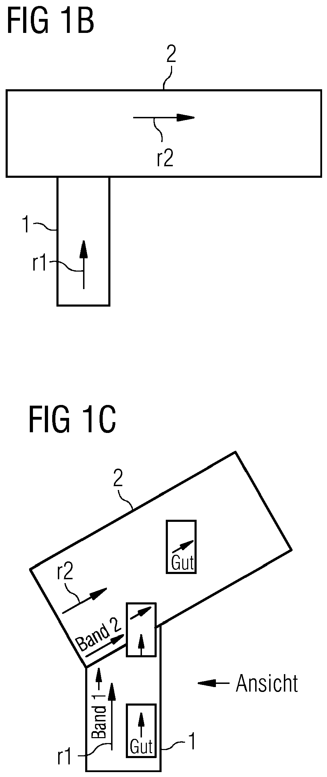

Figur 1b zeigt eine Draufsicht auf eine Variante der Förderstreckenanordnung 10 von Figur 1a. Dabei ist Förderrichtung r1 im Übergabebereich 11 der ersten Förderstrecke 1 rechtwinklig zur Förderrichtung r2 im Übernahmebereich 21 der zweiten Förderstrecke 2.

Figur 1c eine Draufsicht auf einer weiteren Variante der Ausführungsform von Figur 1a. Dabei ist Förderrichtung r1 im Übergabebereich 11 der ersten Förderstrecke 1 nicht rechtwinklig, sondern beispielsweise in einem spitzen Winkel zur Förderrichtung r2 im Übernahmebereich 21 der zweiten Förderstrecke 2.

Figur 2 ein vergrösserter Ausschnitt von Figur 1a zur deutlicheren Sichtbarmachung des Weite und der Höhendifferenzen. Da sich die Ebene E1 nicht mit dem Übernahmebereich 21 schneidet, sondern über diesem liegt, kann man aus mathematischer Sicht auch einen Höhenunterschied h2 definieren, der durch den (minimalen) Abstand von Übernahmebereich 21 zu der Ebene 1 definiert ist.

Figur 3 eine zum besseren Verständnis der Erfindung noch stärker schematisiert Seitenansicht der in Figur 1 dargestellten Förderstreckenanordnung 10. Der Übernahmbereich 21 und der Übergabebereich 11 sind um die Weite w voneineander beabstandet.

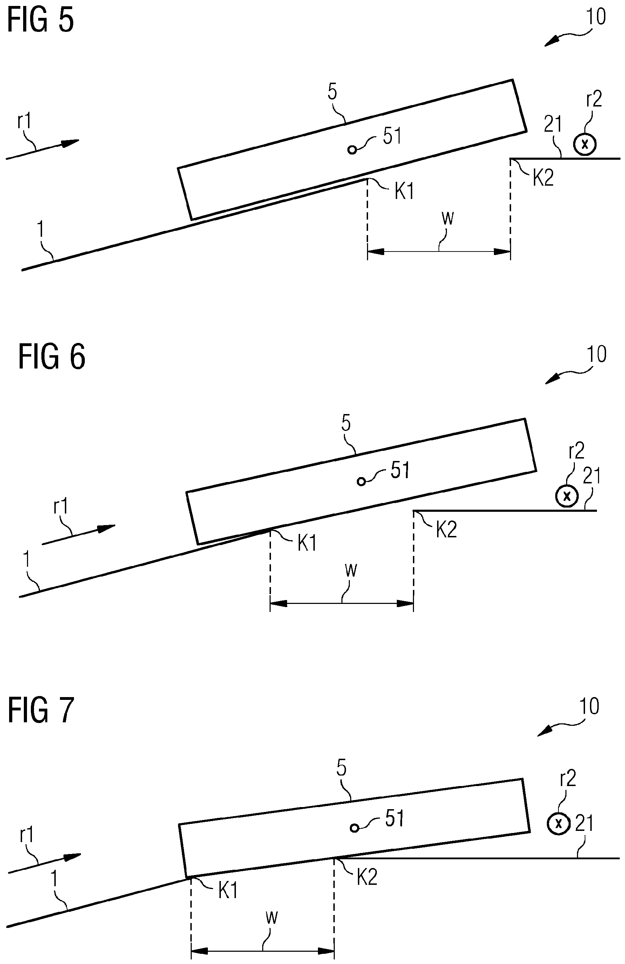

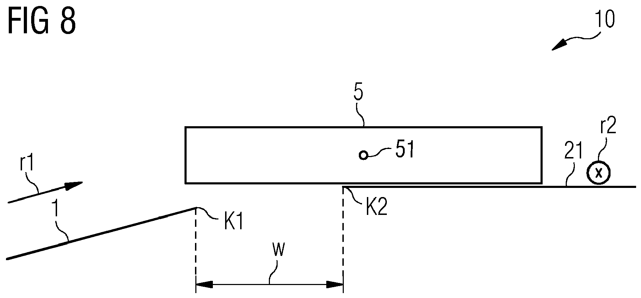

Figuren 4-8 zeigen die Förderstreckenanordnung 10 zu verschieden Zeitpunkten während einer Übergabe eines Stückguts 5 von der ersten Förderstrecke 1 auf die zweite Förderstrecke 2. Figur 4 zeigt, wie das Stückgut 5 auf der ersten Förderstrecke 1 in deren Förderrichtung r1 gefördert wird, während der Schwerpunkt 51 noch über der ersten Förderstrecke 1 liegt. In Figur 5 liegt der Schwerpunkt 51 bereits kurz vor der äussersten End-Kante K1 der ersten Förderstrecke 1. Das Stückgut 5 liegt daher nach wie vor flächig auf der Förderstrecke 1 auf. In Figur 6 wurde der Schwerpunkt 51 über die erste Förderstrecke hinaus befördert. Deshalb führt das Stückgut 51 eine Kippbewegung um die End-Kante K1 aus. In Figur 7 hat das Stückgut 5 aufgrund der Kippbewegung die Anfangskante K2 der zweiten Förderstrecke erreicht, und liegt auf beiden Kanten K1, K2 auf. Ab diesem Moment setzt eine Kippbewegung des Stückguts um die Kante K2 ein, welche die vorherige Kippbewegung um die Kante K1 ablöst. Figur 8 zeigt einen späteren Zeitpunkt, zu welchem die Kippbewegung um die Kante K2 abgeschlossen ist, und das Paket flächig auf der zweiten Förderstrecke aufliegt. Es kann dabei noch über die Förderstrecke 2 hinausragen, wie in Figur 8 gezeigt, ohne dass es durch die etwas tiefer liegende Förderstrecke 1 behindert wird. Auf diese Weise können Verdrehungen bei der Übergabe verhindert oder reduziert werden, und das Stückgut 5 kann nun auf dem Förderband 2 weiter in Richtung R2 gefördert, und gegebenenfalls bei Bedarf durch geeignete Massnahmen auch vollständig auf das Förderband 2 aufliegend befördert werden. Letzteres kann auch bewerkstelligt werden, indem das erste Förderband 1 ausreichend schnell betrieben wird, sodass ihm das zweite Förderband ausreichend kinetische Energie verleiht, dass es noch weiter auf das zweite Förderband 2 rutscht.

Vorzugsweise sind die erste Förderstrecke 1 und die zweite Förderstrecke 2 sind so angeordnet und werden so angesteuert, dass zu einem Zeitpunkt zu welchem das Stückgut 5 die zweite Förderstrecke 2 erstmalig berührt ein Schwerpunkt 51 des Stückguts 5 über der zweiten Förderstrecke liegt. Vorzugsweise berührt das Stückgut 5 zu diesem Zeitpunkt die erste Förderstrecke 1 nicht mehr flächig. Vorzugsweise berührt das Stückgut 5 zu diesem Zeitpunkt die erste Förderstrecke 1 kantig, indem es auf der Kante K2 aufliegt. Gemäss einer Variante wird das Stückgut durch das erste Förderband 1 geworfen, sodass es gar nie beide Förderbänder gleichzeitig berührt. Die Förderstreckenanordnung kann auch so angesteuert werden, dass abhängig von Eigenschaften des Stückguts, beispielsweise einer Grösse des Stückguts, Stückgüter geworfen werden, wenn die ermittelte Grösse einen Schwellwert unterschreitet, und sonst gemäss des in Figuren 4-8 beschriebenen doppelten Kippvorgangs um die Achsen K1 und K2 von der ersten Förderstrecke 1 auf die zweite Förderstrecke 2 übergeben werden.

Gemäss einer weiteren Ausführungsform ist das Antriebssystem 71 ausgestaltet, dass die erste Förderstrecke mit einer ausreichen hohen Fördergeschwindigkeit betrieben wird, welche sicherstellt, dass zu einem Zeitpunkt zu welchem das Stückgut 5 die zweite Förderstrecke 2 erstmalig berührt ein Schwerpunkt 51 des Stückguts 5 über der zweiten Förderstrecke liegt. Vorzugsweise berührt das Stückgut 5 zu diesem Zeitpunkt die erste Förderstrecke 1 nicht mehr flächig, sondern beispielsweise kantig oder gar nicht.

Das Steuerungssystem ist ausgestaltet, zumindest eine Eigenschaft des Stückgutes 5 zu Ermitteln und/oder zu Empfangen, und eine Fördergeschwindigkeit der ersten Förderstrecke 1 und/oder der zweiten Förderstrecke 2 an die zumindest eine Eigenschaft anzupassen. Eine solche Eigenschaft ist beispielsweise die Grösse, insbesondere die Länge des Stückgutes entlang der Förderrichtung r1, aber auch das Gewicht, oder die Gewichtsverteilung können solche Eigenschaften sein.

Das Steuerungssystem 6 ist gemäss dieser Ausführungsform zudem ausgestaltet, eine Grösse des Stückgutes 5 zu Ermitteln und/oder zu Empfangen, und die zweite Förderstrecke 2 zum Übernehmen eines Stückguts anzuhalten, falls die Grösse des Stückguts 5 einen Schwellwert überschreitet.

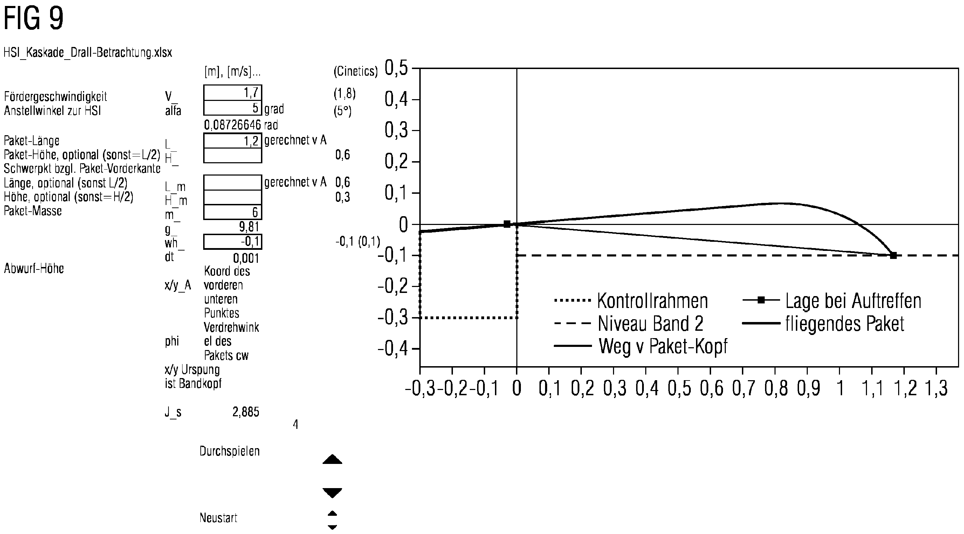

Figuren 9-12 zeigen mathematisch berechnete Bewegungsprofile von jeweils unterschiedlich ausgestalteten paketförmigen Stückgütern, wobei das übergebende erste Band das Stückgut über eine Stufe aus einer höher gelegenen Position übergibt, als es vom empfangenden zweiten Band übernommen wird. Dabei zeigen:

- 	Figur 9: Ein langes Paket, das mit dem Heck auf dem ersten Band liegt und mit dem Bug verzogen wird und auf ein niedriger gelegenes Förderband übergeben wird;

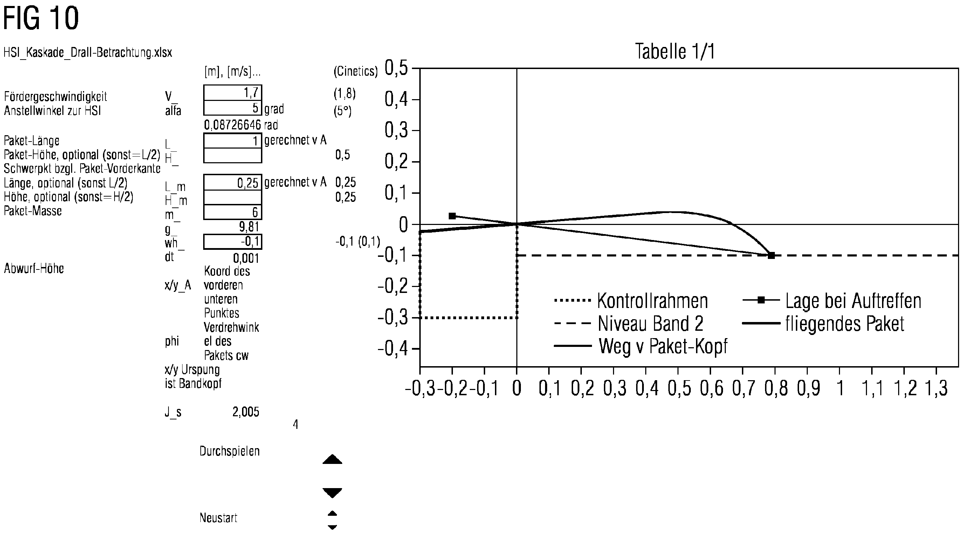

- 	Figur 10: Ein grosses kopflastiges Paket, das mit dem Heck auf dem ersten Band liegt und mit dem Kopf verzogen wird;

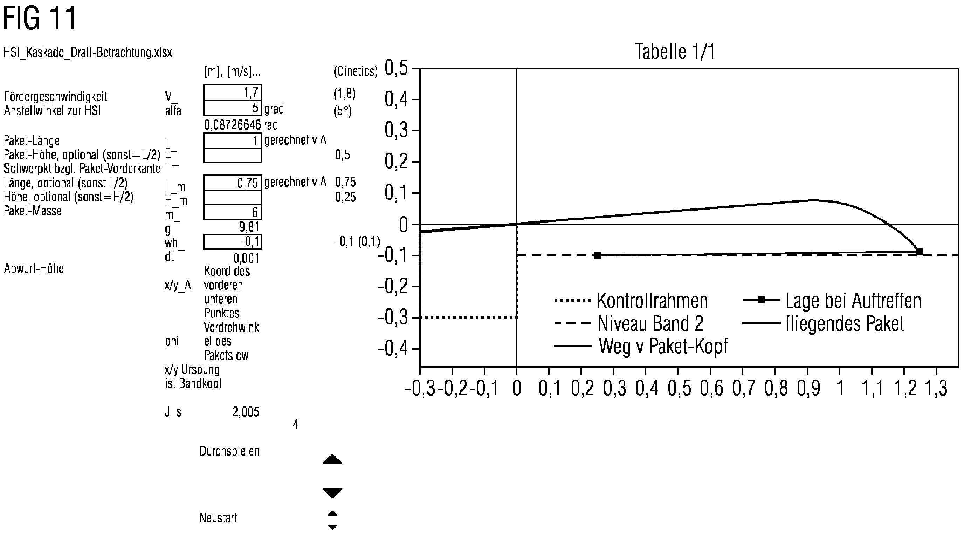

- 	Figur 11: Eine Flugbahn eines grossen hecklastigen Pakets;

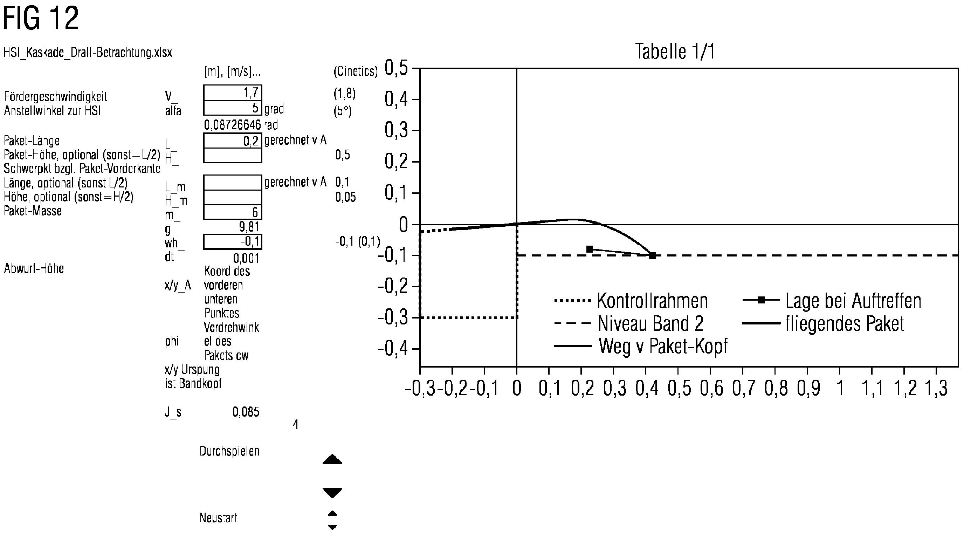

- 	Figur 12: Eine Flugbahn kleines homogenes Pakets mit der Gefahr des Überschlags.

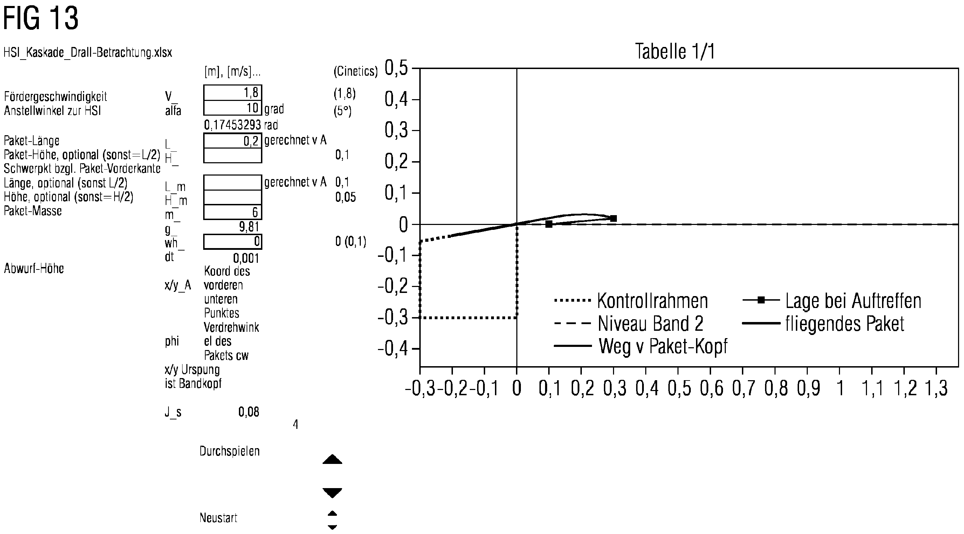

Figuren 13-16 zeigen mathematisch berechnete Bewegungsprofile von jeweils unterschiedlich ausgestalteten paketförmigen Stückgütern, wobei das übergebende erste Band das Stückgut aus einer tiefer gelegenen Position übergibt, als es vom empfangenden zweiten Band übernommen wird. Dabei zeigen:

- 	Figur 13: Die Flugbahn eines kleinen homogenen Pakets;

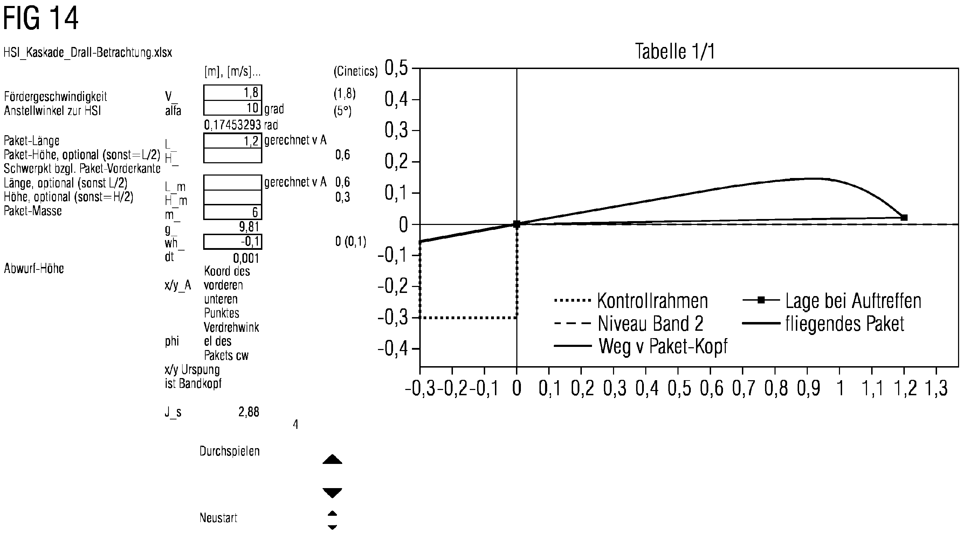

- 	Figur 14: Den Bewegungsablauf eines grossen homogenen Pakets;

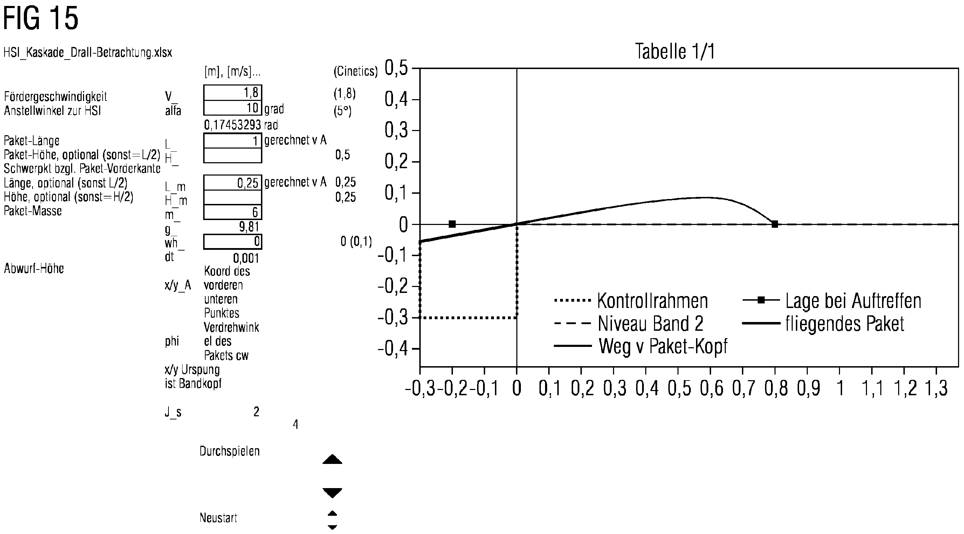

- 	Figur 15: Den Bewegungsablauf einen langen kopflastigen Pakets;

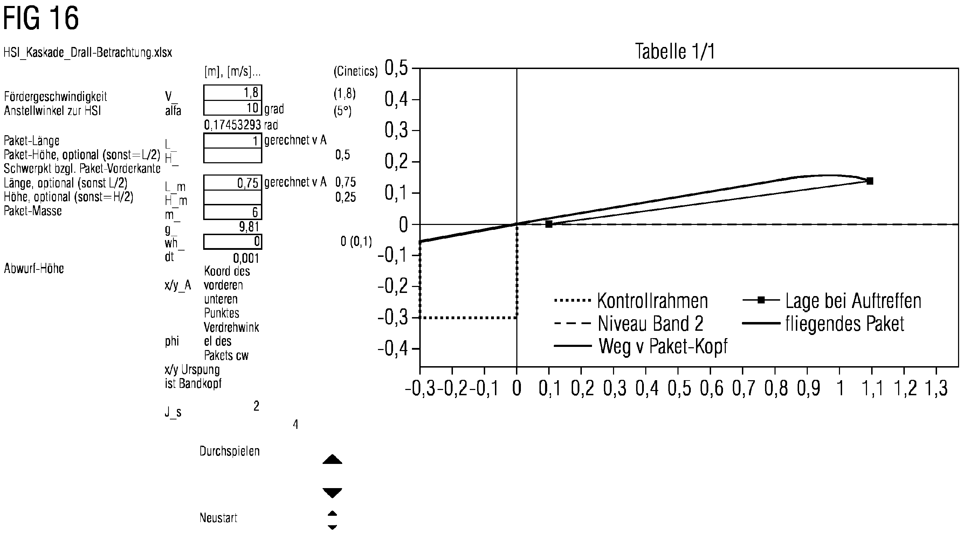

- 	Figur 16: den Bewegungsablauf, respektive die Flugbahn eines langen hecklastigen Pakets.

Weitere Ausführungsformen und -Varianten können wir folgt bewerkstelligt werden, anhand einer beispielhaften Ausführungsvariante von als Förderbändern ausgestalteten Förderstrecken, wobei die erste Förderstrecke als Band 1 und die zweite Förderstrecke als Band 2 bezeichnet wird:

Das Bandende von Band 1 ist gerade. Um die Weite gering zu halten, bietet das Band 2 je nach Winkel zwischen Band 1 und 2 einen schrägen Übergang an. Das kann erreicht werden zB durch:

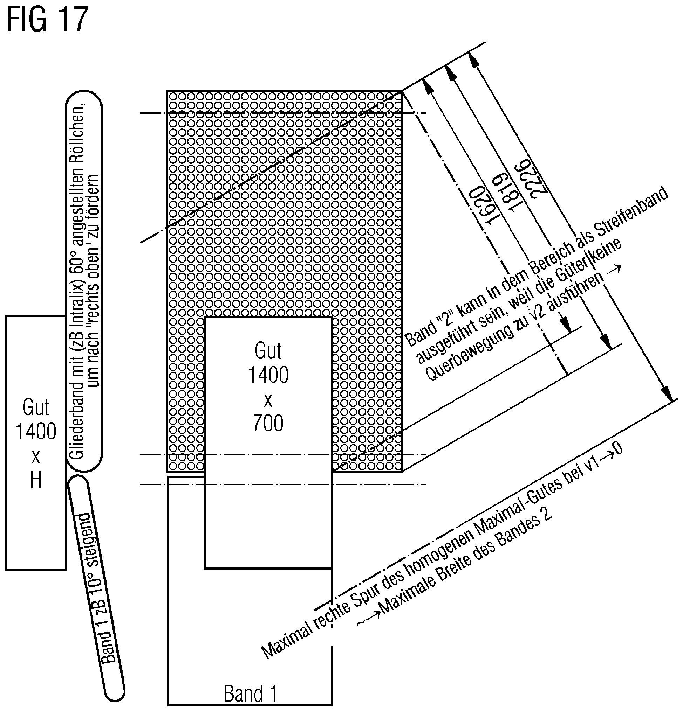

- 	eine Segmentierung und Abstufung des Bandes 2
- 	schräge Bandumlenkung
- 	Kombination beider Lösungen oder
- 	durch die Verwendung eines zB Intralox-Gliederbandes (Siehe Figur 17).

Die Weite kann am Bandende 1 durch einen sehr kleinen Rollendurchmesser zusätzlich optimiert werden.

Figur 17 zeigt eine Förderstreckenanordnung gemäss einer weiteren Ausführungsform der Erfindung, bei welcher ein Intralox-Gliederband zwischen Band 1 und Band 2 verwendet wird. Dabei wird die technische Umsetzung der Erfindung mit einem Gliedergurt der Fa. Intralox realisiert. Die Funktion besteht im geraden Anschluss an das Band 1 und der 60°-Schräg-Förderung in HSI-Richtung (HSI=High Speed Induction). Auf dieser Fläche soll das Gut auch durch gleitendes bremsen Längsgeschwindigkeit abbauen und Quergeschwindigkeit aufbauen. Damit ist noch nicht eindeutig klar, welchen Gleitreibwert, also Belag die Röllchen haben sollen. Sind sie gummiert, ist die darunter befindliche Rolle vorzugsweise glatt (Stahl), sind die Röllchen glatt, ist die Rolle vorzugsweise gummiert. Gegebenenfalls kann diese "Zwangsrolle" zusätzlich angetrieben sein.

Figur 17 zeigt ein im Rahmen eines Ausführungsbeispiels der Erfindung eingeführtes Gliederband mit 60°+x zur Gliederband-Laufrichtung angestellten Röllchen. Damit fördert dieses Band konstant Güter nach rechts oben.

Die Standard-Schrägstellung der Intralox-Lösung wird vorzugsweise gemäss einer Ausführungsform der Erfindung angepasst. Die Röllchen brauchen eine andere Schrägstellung, die aber unabhängig von der Fördergeschwindigkeit ist.

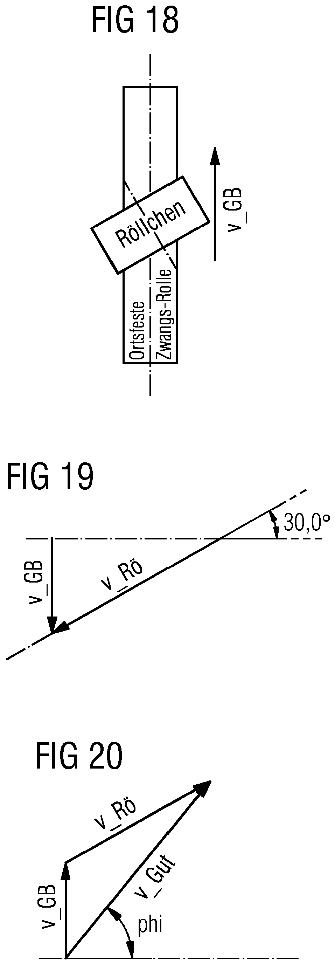

Figur 18 zeigt, wie die Röllchen um 60° verdreht im Gliederband verdreht stehen. Durch Abwälzen auf der ortsfesten Zwangsrolle werden die Röllchen in Rotation versetzt.

Damit ergibt sich im Relativ-System zwischen "Zwangsrolle" und Röllchen das in Figur 19 gezeigte Vektor-Dreieck.

Abwälzgeschwindigkeit des Röllchens ist v_Rö = v_GB/sin(30°).

Im Absolut-System auf der Gliedergurt-Oberseite bedeutet das für das Gut, dass auf den Röllchen liegt, die Vektor-Addition der Umfangsgeschwindigkeit des Röllchens v_Rö und der Geschwindigkeit dieses Relativ-Systems v_GB, siehe Figur 20.

```
VerticaI-Komponente: v_GB + v_Rö * sin(30°) = v_GB * 2

Horizontal-Komponente: v_Rö * cos(30°) = v_GR * 1/tan(30°)

Winkel daraus: phi = arctan( 2 * v_GB / (v_GR * 1/tan(30°)) =
arctan( 2 * tan(30°)) = ~49°
```

Die standard-mäßig mögliche Schrägstellung der Intralox-Röllchen reicht nicht um gute Ergebnisse zu erzielen.

Um einen Winkel von phi=30° zu erreichen, sollte - bei dieser Gliederband-Förderrichtung - der Schrägstellungs-Winkel alfa = arctan(tan(30°)/2) = 16° sein.

Ohne angetriebene Zwangsrolle besteht möglicherweise die Gefahr von Röllchen-Schlupf oder -Stillstand.

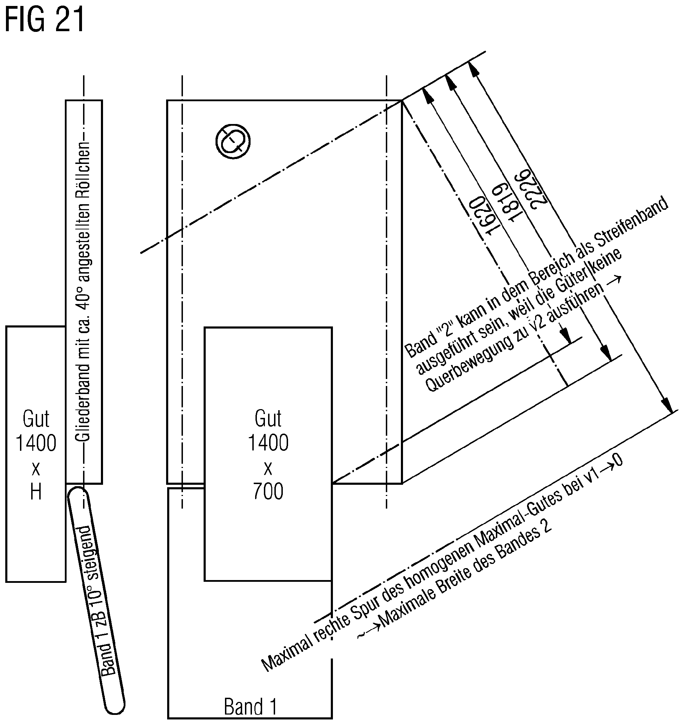

Alternativ wird das Gliederband im Uhrzeigersinn um 90° gedreht. Damit wird phi = 60° und alfa zu 40,1°. Diese Lösung kann ohne Antrieb der Zwangsrolle funktionieren. Figur 21 zeigt diese Ausführungsform.

Die Erfindung funktioniert aber auch mittels Ausführungsformen ohne ein Gliederband zwischen der ersten und der zweiten Förderstrecke, wie ja weiter oben anhand der Figuren 4-8 beispielsweise beschrieben wurde.

Gemäss weiteren Ausführungsformen ergeben sich kostengünstige nicht dynamische Lösung des Übergangs zwischen zwei im Winkel zueinander angeordneten Förderstrecken, beispielsweise an einer HSI und physikalische Effekte und geometrischen Bedingungen am Band-Übergang lassen sich zur optimierten Behandlung der unterschiedlichen Pakete nutzen.

**Patentansprüche**

1. Förderstreckenanordnung (10) zum Übergeben eines Stückguts (5) von einer ersten Förderstrecke (1) auf eine zweite Förderstrecke (2), die Förderstreckenanordnung (10) umfassend die erste Förderstrecke (1) und die zweite Förderstrecke (2), wobei:

   - die erste Förderstrecke (1) einen Übergabebereich (11) mit einer ersten Förderrichtung (r1) umfasst;
   - die zweite Förderstrecke (2) einen Übernahmebereich (21) mit einer zweiten Förderrichtung (r2) umfasst;
   - die erste Förderrichtung (r1) sich von der zweiten Förderrichtung (r2) unterscheidet;
   - der Übergabebereich (11) in den Übernahmebereich (21) mündet;
   - der Übergabebereich (11) eine erste imaginäre unbegrenzte Ebene (E1) aufspannt, die sich nicht mit dem Übernahmebereich (21) schneidet;
   - der Übernahmebereich (21) eine zweite imaginäre unbegrenzte Ebene (E2) aufspannt, die sich nicht mit dem Übergabebereich (11) schneidet.

2. Förderstreckenanordnung (10) zum Übergeben eines Stückguts (5) von einer ersten Förderstrecke (1) auf eine zweite Förderstrecke (2), die Förderstreckenanordnung (10) umfassend die erste Förderstrecke (1) und die zweite Förderstrecke (2), wobei:

- die erste Förderstrecke (1) einen Übergabebereich (11) mit einer ersten Förderrichtung (r1) umfasst;
- die zweite Förderstrecke (2) einen Übernahmebereich (21) mit einer zweiten Förderrichtung (r2) umfasst;
- die erste Förderrichtung (r1) sich von der zweiten Förderrichtung (r2) unterscheidet;
- der Übergabebereich (11) in den Übernahmebereich (21) mündet;
- wobei die erste Förderstrecke (1) und die zweite Förderstrecke (2) so angeordnet und angesteuert sind, dass zu einem Zeitpunkt zu welchem das Stückgut (5) die zweite Förderstrecke (2) erstmalig berührt ein Schwerpunkt (51) des Stückguts (5) über der zweiten Förderstrecke liegt.

3. Förderstreckenanordnung (10) nach Anspruch 2, wobei das Stückgut (5) zu diesem Zeitpunkt die erste Förderstrecke (1) nicht mehr flächig berührt, sondern vorzugsweise kantig berührt, oder gar nicht berührt.

4. Förderstreckenanordnung (10) nach einem der vorhergehenden Ansprüche, wobei der Übergabebereich in der ersten Förderrichtung ansteigend ausgestaltet ist, vorzugsweise mit einer Steigung von weniger als 10°, vorzugsweise mit einer Steigung zwischen 1° und 4°, vorzugsweise mit einer Steigung von 2.5°.

5. Förderstreckenanordnung (10) nach einem der vorhergehenden Ansprüche, wobei der Übernahmebereich höher als der Übergabebereich angeordnet ist, wobei der Übernahmebereich vorzugsweise zwischen 2 mm und 5 mm höher als der Übergabebereich angeordnet ist, vorzugsweise etwa 5 mm höher als der Übergabebereich angeordnet ist.

6. Förderstreckenanordnung (10) nach einem der vorhergehenden Ansprüche, umfassend Antriebssystem (71) welches ausgestaltet ist, dass die erste Förderstrecke mit einer Fördergeschwindigkeit betrieben wird, welche sicherstellt, dass zu einem Zeitpunkt zu welchem das Stückgut (5) die zweite Förderstrecke (2) erstmalig berührt ein Schwerpunkt (51) des Stückguts (5) über der zweiten Förderstrecke liegt, wobei vorzugsweise das Stückgut (5) zu diesem Zeitpunkt die erste Förderstrecke (1) nicht mehr flächig berührt, vorzugsweise kantig berührt oder gar nicht berührt.

7. Förderstreckenanordnung (10) nach einem der vorhergehenden Ansprüche, wobei zumindest die erste Förderstrecke Teil einer High Speed Induction ist.

8. Förderstreckenanordnung (10) nach einem der vorhergehenden Ansprüche, umfassend ein Steuerungssystem (6), welches ausgestaltet ist, zumindest eine Eigenschaft des Stückgutes zu Ermitteln und/oder zu Empfangen, und eine Fördergeschwindigkeit der ersten Förderstrecke (1) und/oder der zweiten Förderstrecke (2) an die zumindest eine Eigenschaft anzupassen.

9. Förderstreckenanordnung (10) nach einem der vorhergehenden Ansprüche, umfassend ein Steuerungssystem (6), welches ausgestaltet ist, eine Grösse des Stückgutes zu Ermitteln und/oder zu Empfangen, und eine Fördergeschwindigkeit der ersten Förderstrecke (1) und/oder der zweiten Förderstrecke (2) an die ermittelte Grösse anzupassen.

10. Förderstreckenanordnung (10) nach einem der Ansprüche 1-8, umfassend ein Steuerungssystem (6), welches ausgestaltet ist, eine Grösse des Stückgutes (5) zu Ermitteln und/oder zu Empfangen, und die zweite Förderstrecke (2) zum Übernehmen eines Stückguts anzuhalten, falls die Grösse des Stückguts (5) einen Schwellwert überschreitet.

11. Verfahren zum Übergeben eines Stückguts (5) von einer ersten Förderstrecke (1) auf eine zweite Förderstrecke (2), wobei:

- die erste Förderstrecke (1) einen Übergabebereich (11) mit einer ersten Förderrichtung (r1) umfasst;
- die zweite Förderstrecke (2) einen Übernahmebereich (21) mit einer zweiten Förderrichtung (r2) umfasst;
- die erste Förderrichtung (r1) sich von der zweiten Förderrichtung (r2) unterscheidet;
- der Übergabebereich (11) in den Übernahmebereich (21) mündet;
- wobei die erste Förderstrecke (1) und die zweite Förderstrecke (2) so angeordnet und angesteuert sind, dass zu einem Zeitpunkt zu welchem das Stückgut (5) die zweite Förderstrecke (2) erstmalig berührt ein Schwerpunkt (51) des Stückguts (5) über der zweiten Förderstrecke liegt.

12. Verfahren nach Anspruch 11, wobei das Stückgut (5) zu diesem Zeitpunkt die erste Förderstrecke (1) nicht mehr flächig berührt, vorzugsweise kantig berührt, oder gar nicht berührt.

13. Verfahren nach einem der Ansprüche 11 oder 12, wobei das Verfahren mittels einer der in einem der Ansprüche 1-12 beschriebenen Förderstreckenanordnungen (10) durchgeführt wird.

14. Verfahren nach einem der Ansprüche 11-13, wobei eine Grösse des Stückgutes ermittelt wird, und eine Fördergeschwindigkeit der ersten Förderstrecke (1) und/oder der zweiten Förderstrecke (2) an die ermittelte Grösse angepasst wird.

15. System (10) umfassend Mittel zur Durchführung eines der Verfahrens gemäss einem der Ansprüche 11- 14.

# FIG 1A

EP 3 514 087 A1

FIG 1B

FIG 1C

FIG 2

Weite

Höhen-Diff. 1

Höhen-Diff. 2

Band 2

FIG 3

10

E2

11

E1

21

h2

h1

r1

1

w

r2

2

FIG 4

10

r1

5

51

K1

21

r2

1

w

FIG 5

FIG 6

FIG 7

# FIG 8

# FIG 9

HSI_Kaskade_Drall-Betrachtung.xlsx

| | | [m], [m/s]... | | (Cinetics) |
|---|---|---|---|---|
| Fördergeschwindigkeit | V_ | 1,7 | | (1,8) |
| Anstellwinkel zur HSI | alfa | 5 grad | | (5°) |
| | | 0,08726646 rad | | |
| Paket-Länge | L_ | 1,2 gerechnet v A | | |
| Paket-Höhe, optional (sonst=L/2) | H_ | | | 0,6 |
| Schwerpkt bzgl. Paket-Vorderkante | | | | |
| Länge, optional (sonst L/2) | L_m | gerechnet v A | | 0,6 |
| Höhe, optional (sonst=H/2) | H_m | | | 0,3 |
| Paket-Masse | m_ | 6 | | |
| | g_ | 9,81 | | |
| | wh_ | -0,1 | | -0,1 (0,1) |
| | dt | 0,001 | | |

Abwurf-Höhe

x/y_A — Koord des vorderen unteren Punktes

phi — Verdrehwinkel des Pakets cw

x/y Urspung ist Bandkopf

J_s     2,885

Durchspielen

Neustart

# FIG 10

HSI_Kaskade_Drall-Betrachtung.xlsx

EP 3 514 087 A1

Tabelle 1/1

|  |  | [m], [m/s]... |  | (Cinetics) |
|---|---|---|---|---|
| Fördergeschwindigkeit | V | 1,7 |  | (1,8) |
| Anstellwinkel zur HSI | alfa | 5 | grad | (5°) |
|  |  | 0,08726646 | rad |  |
| Paket-Länge | L | 1 | gerechnet v A |  |
| Paket-Höhe, optional (sonst=L/2) | H |  |  | 0,5 |
| Schwerpkt bzgl. Paket-Vorderkante |  |  |  |  |
| Länge, optional (sonst L/2) | L_m | 0,25 | gerechnet v A | 0,25 |
| Höhe, optional (sonst=H/2) | H_m |  |  | 0,25 |
| Paket-Masse | m | 6 |  |  |
|  | g | 9,81 |  |  |
|  | wh | -0,1 |  | -0,1 (0,1) |
|  | dt | 0,001 |  |  |
| Abwurf-Höhe | x/y_A | Koord des vorderen unteren Punktes |  |  |
|  | phi | Verdrehwinkel des Pakets cw |  |  |
|  | x/y Urspung ist Bandkopf |  |  |  |
|  | J_s | 2,005 |  |  |

4

Durchspielen  ▲

▼

Neustart  ▲
▼

**Legend:**
- ······· Kontrollrahmen
- ‒ ‒ ‒ Niveau Band 2
- ——— Weg v Paket-Kopf
- ■ Lage bei Auftreffen
- ——— fliegendes Paket

# FIG 11

HSI_Kaskade_Drall-Betrachtung.xlsx

EP 3 514 087 A1

Tabelle 1/1

| | | [m], [m/s]... | | (Cinetics) |
|---|---|---|---|---|
| Fördergeschwindigkeit | V | 1,7 | | (1,8) |
| Anstellwinkel zur HSI | alfa | 5 grad | | (5°) |
| | | 0,08726646 rad | | |
| Paket-Länge | L | 1 | gerechnet v A | |
| Paket-Höhe, optional (sonst=L/2) | H | | | 0,5 |
| Schwerpkt bzgl. Paket-Vorderkante | | | | |
| Länge, optional (sonst L/2) | L_m | 0,75 | gerechnet v A | 0,75 |
| Höhe, optional (sonst=H/2) | H_m | | | 0,25 |
| Paket-Masse | m | 6 | | |
| | g | 9,81 | | |
| | wh | -0,1 | | -0,1 (0,1) |
| | dt | 0,001 | | |

Abwurf-Höhe

x/y_A — Koord des vorderen unteren Punktes

phi — Verdrehwinkel des Pakets cw

x/y Urspung ist Bandkopf

J_s        2,005

4

Durchspielen     ▲

▼

Neustart        ▲
▼

**Legende:**
- ⋯⋯⋯ Kontrollrahmen
- – – – Niveau Band 2
- —— Weg v Paket-Kopf
- ■ Lage bei Auftreffen
- —— fliegendes Paket

# FIG 12

HSI_Kaskade_Drall-Betrachtung.xlsx

| | | [m], [m/s]... | | (Cinetics) |
|---|---|---|---|---|
| Fördergeschwindigkeit | V_ | 1,7 | | (1,8) |
| Anstellwinkel zur HSI | alfa | 5 grad | | (5°) |
| | | 0,08726646 rad | | |
| Paket-Länge | L_ | 0,2 gerechnet v A | | |
| Paket-Höhe, optional (sonst=L/2) | H_ | | | 0,5 |
| Schwerpkt bzgl. Paket-Vorderkante | | | | |
| Länge, optional (sonst L/2) | L_m | gerechnet v A | | 0,1 |
| Höhe, optional (sonst=H/2) | H_m | | | 0,05 |
| Paket-Masse | m_ | 6 | | |
| | g_ | 9,81 | | |
| | wh_ | -0,1 | | -0,1 (0,1) |
| | dt | 0,001 | | |

Abwurf-Höhe

x/y_A  Koord des vorderen unteren Punktes

phi  Verdrehwinkel des Pakets cw

x/y Urspung ist Bandkopf

J_s       0,085

4

Durchspielen

Neustart

Legende:
- ⋯⋯⋯ Kontrollrahmen
- ▬■▬ Lage bei Auftreffen
- – – – Niveau Band 2
- ——— fliegendes Paket
- ——— Weg v Paket-Kopf

EP 3 514 087 A1

# FIG 13

HSI_Kaskade_Drall-Betrachtung.xlsx

Tabelle 1/1

| | | [m], [m/s]... | | (Cinetics) |
|---|---|---|---|---|
| Fördergeschwindigkeit | V_ | 1,8 | | (1,8) |
| Anstellwinkel zur HSI | alfa | 10 grad | | (5°) |
| | | 0,17453293 rad | | |
| Paket-Länge | L_ | 0,2 gerechnet v A | | |
| Paket-Höhe, optional (sonst=L/2) | H_ | | | 0,1 |
| Schwerpkt bzgl. Paket-Vorderkante | | | | |
| Länge, optional (sonst L/2) | L_m | gerechnet v A | | 0,1 |
| Höhe, optional (sonst=H/2) | H_m | | | 0,05 |
| Paket-Masse | m_ | 6 | | |
| | g_ | 9,81 | | |
| | wh_ | 0 | | 0 (0,1) |
| | dt | 0,001 | | |
| Abwurf-Höhe | x/y_A | Koord des vorderen unteren Punktes | | |
| | phi | Verdrehwinkel des Pakets cw | | |
| | | x/y Urspung ist Bandkopf | | |
| | J_s | 0,08 | | |

4

Durchspielen

▲

▼

Neustart

▲
▼

Legend:
- ·········· Kontrollrahmen
- ■ Lage bei Auftreffen
- – – – Niveau Band 2
- ——— fliegendes Paket
- ——— Weg v Paket-Kopf

EP 3 514 087 A1

# FIG 14

HSI_Kaskade_Drall-Betrachtung.xlsx

Tabelle 1/1

| | | [m], [m/s]... | | (Cinetics) |
|---|---|---|---|---|
| Fördergeschwindigkeit | V | 1,8 | | (1,8) |
| Anstellwinkel zur HSI | alfa | 10 | grad | (5°) |
| | | 0,17453293 | rad | |
| Paket-Länge | L | 1,2 | gerechnet v A | |
| Paket-Höhe, optional (sonst=L/2) | H | | | 0,6 |
| Schwerpkt bzgl. Paket-Vorderkante | | | | |
| Länge, optional (sonst L/2) | L_m | | gerechnet v A | 0,6 |
| Höhe, optional (sonst=H/2) | H_m | | | 0,3 |
| Paket-Masse | m | 6 | | |
| | g | 9,81 | | |
| | wh | -0,1 | | 0 (0,1) |
| | dt | 0,001 | | |

Abwurf-Höhe

x/y_A  Koord des vorderen unteren Punktes

phi  Verdrehwinkel des Pakets cw

x/y Urspung ist Bandkopf

J_s  2,88

4

Durchspielen

Neustart

**Legende:**
- ······· Kontrollrahmen
- ─ ─ ─ Niveau Band 2
- ─── Weg v Paket-Kopf
- ■ Lage bei Auftreffen
- fliegendes Paket

EP 3 514 087 A1

# FIG 15

HSI_Kaskade_Drall-Betrachtung.xlsx

**Tabelle 1/1**

| | | [m], [m/s]... | | (Cinetics) |
|---|---|---|---|---|
| Fördergeschwindigkeit | V | 1,8 | | (1,8) |
| Anstellwinkel zur HSI | alfa | 10 | grad | (5°) |
| | | 0,17453293 | rad | |
| Paket-Länge | L | 1 | gerechnet v A | |
| Paket-Höhe, optional (sonst=L/2) | H | | | 0,5 |
| Schwerpkt bzgl. Paket-Vorderkante | | | | |
| Länge, optional (sonst L/2) | L_m | 0,25 | gerechnet v A | 0,25 |
| Höhe, optional (sonst=H/2) | H_m | | | 0,25 |
| Paket-Masse | m | 6 | | |
| | g | 9,81 | | |
| | wh | 0 | | 0 (0,1) |
| | dt | 0,001 | | |

Abwurf-Höhe

x/y_A — Koord des vorderen unteren Punktes

phi — Verdrehwinkel des Pakets cw

x/y Urspung ist Bandkopf

J_s        2

4

Durchspielen

Neustart

**Legende:**
- ········· Kontrollrahmen
- – – – Niveau Band 2
- —— Weg v Paket-Kopf
- —■— Lage bei Auftreffen
- —— fliegendes Paket

# FIG 16

HSI_Kaskade_Drall-Betrachtung.xlsx

Tabelle 1/1

| | | [m], [m/s]... | | (Cinetics) |
|---|---|---|---|---|
| Fördergeschwindigkeit | V_ | 1,8 | | (1,8) |
| Anstellwinkel zur HSI | alfa | 10 | grad | (5°) |
| | | 0,17453293 | rad | |
| Paket-Länge | L_ | 1 | gerechnet v A | |
| Paket-Höhe, optional (sonst=L/2) | H_ | | | 0,5 |
| Schwerpkt bzgl. Paket-Vorderkante | | | | |
| Länge, optional (sonst L/2) | L_m | 0,75 | gerechnet v A | 0,75 |
| Höhe, optional (sonst=H/2) | H_m | | | 0,25 |
| Paket-Masse | m_ | 6 | | |
| | g_ | 9,81 | | |
| | wh_ | 0 | | 0 (0,1) |
| | dt | 0,001 | | |

x/y_A  Koord des vorderen unteren Punktes

phi  Verdrehwinkel des Pakets cw

x/y Ursprung ist Bandkopf

J_s           2

4

Durchspielen

Neustart

(Chart legend:)
· · · · · · Kontrollrahmen
– – – Niveau Band 2
—— Weg v Paket-Kopf
—■— Lage bei Auftreffen
—— fliegendes Paket

(Chart y-axis): 0,5  0,4  0,3  0,2  0,1  0  -0,1  -0,2  -0,3  -0,4

(Chart x-axis): -0,3 -0,2 -0,1 0 0,1 0,2 0,3 0,4 0,5 0,6 0,7 0,8 0,9 1 1,1 1,2 1,3

EP 3 514 087 A1

# FIG 17

Gut
1400
x
H

Band 1 zB 10° steigend

Gliederband mit (zB Intralix) 60° angestellten Röllchen,
um nach "rechts oben" zu fördern

Gut
1400
x
700

Band 1

1620

1819

2226

Band "2" kann in dem Bereich als Streifenband
ausgeführt sein, weil die Güter|keine
Querbewegung zu v2 ausführen →

Maximal rechte Spur des homogenen Maximal-Gutes bei v1→0

↝→Maximale Breite des Bandes 2

## FIG 18

## FIG 19

## FIG 20

## FIG 21

Gliederband mit ca. 40° angestellten Röllchen

Band 1 zB 10° steigend

Gut 1400 X H

Gut 1400 X 700

Band 1

1620
1819
2226

Band "2" kann in dem Bereich als Streifenband ausgeführt sein, weil die Güter keine Querbewegung zu v2 ausführen →

Maximal rechte Spur des homogenen Maximal-Gutes bei v1→0

→Maximale Breite des Bandes 2

**Europäisches Patentamt**
**European Patent Office**
**Office européen des brevets**

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 18 15 2556

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | FR 3 003 551 A1 (SIDEL PARTICIPATIONS [FR]) 26. September 2014 (2014-09-26) * Abbildungen 4-6 * ----- | 2,3,6,7, 12,13,15 | INV. B65G47/53 B65G47/57 |
| X | DE 202 16 077 U1 (CRISPLANT AS ARHUS [DK]) 26. Februar 2004 (2004-02-26) * Abbildungen 9-26 * ----- | 2-7, 11-13,15 | |
| X | JP H09 30638 A (YONDEN ENG KK) 4. Februar 1997 (1997-02-04) * Abbildungen 1-19 * ----- | 2-4,6,7, 11-13,15 | |
| X | JP H05 61124 U (-) 10. August 1993 (1993-08-10) * Abbildungen 1,2 * ----- | 2-7, 11-13,15 | |
| X | NL 1 027 412 C2 (BURG WILLIAM VAN DER [NL]) 4. Mai 2006 (2006-05-04) * Abbildungen 1,2 * ----- | 2-7, 11-13,15 | |

**RECHERCHIERTE SACHGEBIETE (IPC)**

B65G

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 20. September 2018 | Thenert, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04E09)

Europäisches
Patentamt

European
Patent Office

Office européen
des brevets

## UNVOLLSTÄNDIGE RECHERCHE
## ERGÄNZUNGSBLATT C

**Nummer der Anmeldung**

EP 18 15 2556

Vollständig recherchierbare Ansprüche:
        2-15

Nicht recherchierte Ansprüche:
        1

Grund für die Beschränkung der Recherche:

Bezug nehmend auf die Aufforderung nach Regel 62a (1) EPÜ hat der
Anmelder angegeben, dass er eine Recherche auf Grundlage der Ansprüche
2-15 beantragt.

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-7, 11-13, 15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

Nummer der Anmeldung

EP 18 15 2556

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-7, 11-13, 15

   Eine Förderstreckenanordnung, welche eine sichere Übergabe von "größeren" Stückgütern zwischen zwei mit Abstand angeordneten Förderstrecken ermöglicht.
   ---

2. Ansprüche: 8-10, 14

   Eine Förderstreckenanordnung, welche eine sichere Übergabe von unterschiedlich großen Stückgütern zwischen zwei mit Abstand angeordneten Förderstrecken garantiert.
   ---

## ANHANG ZUM EUROPÄISCHEN RECHERCHENBERICHT
## ÜBER DIE EUROPÄISCHE PATENTANMELDUNG NR.

EP 18 15 2556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2018

| Im Recherchenbericht angeführtes Patentdokument | Datum der Veröffentlichung | Mitglied(er) der Patentfamilie | Datum der Veröffentlichung |
|---|---|---|---|
| FR 3003551 A1 | 26-09-2014 | CA 2907600 A1<br>CN 105164033 A<br>EP 2978697 A1<br>ES 2651336 T3<br>FR 3003551 A1<br>PL 2978697 T3<br>PT 2978697 T<br>US 2016052727 A1<br>WO 2014154608 A1 | 02-10-2014<br>16-12-2015<br>03-02-2016<br>25-01-2018<br>26-09-2014<br>28-02-2018<br>18-12-2017<br>25-02-2016<br>02-10-2014 |
| DE 20216077 U1 | 26-02-2004 | KEINE | |
| JP H0930638 A | 04-02-1997 | KEINE | |
| JP H0561124 U | 10-08-1993 | KEINE | |
| NL 1027412 C2 | 04-05-2006 | KEINE | |

EPO FORM P0461

Für nähere Einzelheiten zu diesem Anhang : siehe Amtsblatt des Europäischen Patentamts, Nr.12/82